Europäisches Patentamt

European Patent Office

Office européen des brevets

(19)

(11) **EP 0 712 715 A2**

(12) **EUROPEAN PATENT APPLICATION**

(43) Date of publication:
**22.05.1996 Bulletin 1996/21**

(51) Int Cl.⁶: **B29C 61/06**
// H02G15/18

(21) Application number: **95119943.9**

(22) Date of filing: **05.01.1984**

(84) Designated Contracting States:
**AT BE CH DE FR IT LI NL SE**

(30) Priority: 06.01.1983 GB 8300218
22.07.1983 GB 8319855
16.08.1983 GB 8322004

(62) Application number of earlier application in accordance with Art. 76 EPC: **90203172.3**

(71) Applicant: **RAYCHEM CORPORATION**
**Menlo Park California 94025 (US)**

(72) Inventors:
• **Pithouse, Kenneth B.**
**South Marston, Nr Swindon, Wiltshire (GB)**

• **Kridl, Thomas A.**
**Union Street, California 94587 (US)**
• **Triplett, James T.**
**Livermore, California 94550 (US)**

(74) Representative: **Benson, John Everett et al**
**Raychem Limited**
**Intellectual Property Law Department**
**Faraday Road**
**Dorcan**
**Swindon, Wiltshire SN3 5HH (GB)**

Remarks:
This application was filed on 18 - 12 - 1995 as a divisional application to the application mentioned under INID code 62.

(54) **Dimensionally recoverable article**

(57)    A recoverable article comprising a composite structure is produced from a recoverable fabric and a polymeric matrix material. The structure is used for environmental protection of cables, pipes and other substrates.

The recoverable fabric comprises a cross-linked recoverable polyolefin having a recovery stress of 1.5 to 5 µPa, and the matrix is cross-linked such that the recovery ratio available in the composite is at least 65% of that available in the free fabric, and the polymeric matrix material, per se, after irradiation has room temperature elongation of 400-700% measured at a strain rate of 300% per minute.

Fig.1.

WARP

WEFT

**Description**

BACKGROUND OF THE INVENTION

This invention relates to recoverable articles.

A recoverable article is an article the dimensional configuration of which may be made substantially to change when subjected to a particular treatment for example heat treatment. Usually these articles recover, on heating, towards an original shape from which they have previously been deformed, but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962; 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material may be cross-linked at any stage in the production of the article that will enhance the desired dimensional recoverability. One method of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape. A further method comprises deforming a substantially non-crosslinked polymeric material at a temperature below the crystalline melting point or softening point of the material, fusing together parts of the material or a part or parts of the material and at least one other polymeric component to produce the configuration of at least one hollow heat-recoverable article and subsequently cross-linking the substantially non-cross-linked material.

In other articles, an elastomeric member is held in a stretched state by a second member, which, upon heating weakens and thus allows the elastomeric member to recover. Heat-recoverable articles of this type are described, for example, in British Patent 1,440,524 in which an outer tubular elastomeric member is held in a stretched state by an inner tubular member.

Heat-recoverable articles have found particular use in the environmental protection of elongate substrates such as for example splices in telecommunication cables.

In addition to making the environmental seal the sleeve may be required to withstand an internal pressure, either because the complete splice enclosure is pressure tested for leaks, as for example in the Bell cycle and British Telecom specifications, or because temperatures reached in service create a significant internal pressure. Whereas the known heat-recoverable sleeves are quite suitable for the conditions encountered with distribution splice enclosures, many larger telecommunication cables are internally pressurised to exclude moisture and the thicker-walled sleeves which would be required to withstand such pressures long term are more difficult and expensive to manufacture and require greater skill to install in the field.

It has been proposed, in U.S. Patent 3 669 157 to Carolina Narrow Fabric Company and in Japanese Patent 53-13805 to Matsushita, to provide heat-shrinkable tubular fabric articles which may be impregnated with certain thermosetting resins. However, we have found that the articles disclosed therein are very difficult to install because they are subject to displacement of the resin on recovery, resulting in burst-through of fabric by the resin, or delamination of the resin from the fabric. Thus these prior art articles are of limited utility and are too craft-sensitive for use in most telecommunications applications.

The present invention provides an article which has an improved resistance to the forces of recovery and can retain its integrity so as to produce in the appropriate circumstances as described herein an effective environmental and if desired a pressure-retaining seal.

In one aspect the invention provides a dimensionally heat-recoverable article comprising a composite structure of a heat-recoverable fabric and a polymer matrix material wherein:

(a) the heat-recoverable fabric comprises fibres that will recover when heated, the fibres having a recovery stress $Y$ of at least $5 \times 10^{-2}$ MPa at a temperature above their recovery temperature; and

(b) the polymer matrix material has an elongation/ temperature profile such that there exists a temperature $(T)$ which is at or above the recovery temperature of the fibres at which temperature the polymer matrix material has an elongation to break of greater than 20% and a 20% secant modulus $X$ of at least $10^{-2}$ MPa (measured at a strain rate of 300% per minute), and at which temperature the inequality (1) is satisfied:

$$\frac{X}{Y}\frac{(1-R)}{R} \text{ is less than one} \tag{1}$$

wherein R is the mean effective volume fraction of heat-recoverable fibres in the composite structure along a given direction based on the total volume of the composite structure, or relevant portion thereof.

The invention also provides a method of producing a dimensionally heat recoverable article, comprising a composite structure which is recoverable by virtue of a recoverable fibre component thereof, which method comprises combining a heat-recoverable fabric as defined above with a polymeric material as defined above for the matrix.

The term "fibre" as used herein includes filaments e.g. monofilaments or multifilaments, and also staple fibres, wires and tapes. The fabrics used in the articles according to the invention preferably employ the heat shrinkable fibres in the form of filaments, especially monofilaments.

The heat-recoverable fibres used in the article of the invention preferably have a minimum recovery stress of $10^{-1}$ MPa, more preferably $5 \times 10^{-1}$ and usually at least 1 MPa at a temperature above the transition temperature of the fibres. There is in theory no upper limit of recovery stress, but in practice 200 MPa and more usually 100MPa is the highest figure normally achievable with polymeric fibres.

The fibres are preferably formed from a polymeric heat-recoverable material. By "the recovery temperature" of polymeric heat-recoverable materials is meant that temperature at which the recovery of the polymeric material will go substantially to completion. In general, the recovery temperature will be the crystalline melting transition temperature if the polymer is crystalline or the glass transition temperature if the polymer is amorphous.

In most forms of article according to the invention the polymer matrix will become soft at temperatures below the recovery temperature of the heat-recoverable fibres so that the temperature (T) at which the matrix material has the required elongation and secant modulus and at which the inequality (1) is satisfied will be the same as the recovery temperature of the fibres. The invention includes, however, those cases in which a rigid matrix material holds out the fibres against recovery over a temperature range above the recovery temperature of the fibres and then softens so that the fibres can recover.

The heat-recoverable fibres are preferably formed from a polymeric material that imparts good physical properties and, in particular, good creep resistance to the fibres. Olefin polymers such as polyethylene and ethylene copolymers, polyamides, polyesters, acrylic polymers and other polymers may be employed and preferably those that are capable of being cross-linked. A particularly preferred polymeric material for the fibres is based on polyethylene having a density of from 0.94 to 0.97/gms/cc, a weight average molecular weight $M\underline{w}$ of from $80 \times 10^3$ to $200 \times 10^3$ and a number average molecular weight $M\underline{n}$ of from $15 \times 10^3$ to $30 \times 10^3$.

Preferably the recovery temperature of the fibres is 60°C or more, most preferably from 80°C to 250°C, such as, for example, 120 - 150°C.

When the fibre is cross-linked by irradiation it is convenient to incorporate the cross-linking step into manufacture of the fibre. The fibre can be extruded, stretched at a temperature below its melting temperature, preferably by an amount of from 800 to 2000 %, then subjected to irradiation to effect cross-linking. A less preferred way of making the fibre is to extrude the fibre, irradiate to cross-link, then heat the fibre, preferably to above its melting temperature, stretching the fibre, and then cooling the stretched fibre. High density polyethylene fibres are preferably irradiated with a dose of from about 5 to about 35 megarads, preferably from about 5 to about 25 megarads and in particular from about 7 to about 18 megarads, especially from 10 to about 18 megarads. Usually the gel content of the cross-linked fibre is greater than 20%, preferably greater than 30%, most preferably greater than 40%. In practice, gel contents greater than 90% are not easily achievable. Fibres produced in this way can have a high strength after recovery. A further advantage of fibre irradiation will be mentioned below in connection with lamination.

The heat-recoverable fabric can, if desired, be made solely of heat-recoverable fibres as described above or can contain other fibres in addition to the heat-recoverable fibres. Where the fabric contains such other fibres, R in equation (1) relates only to the heat-recoverable fibre component. The fabric can be knitted, woven, non-woven, braided, or the like. The recoverable fibres can form part of the fabric itself as it is made or may be additional and inserted after production of the basic fabric. In a preferred embodiment the fabric is a woven fabric. The woven fabric can contain only heat-recoverable fibres or it can contain heat-recoverable fibres together with non-heat-recoverable fibres or filaments. The fabric can be woven in a pattern, for example, twill, broken twill, satin, sateen, Leno, plain, hop sack, sack and various weave combinations, in single or multiple ply weaves for example two or three ply weaves. Preferably the fabric is a woven fabric that has heat-recoverable fibres in one direction and dimensionally heat stable fibres in the other direction so that the fabric as a whole is recoverable in a single direction only, and the description below will, in general, be made in terms of such a fabric. However, the features described may be applied to other fabrics.

The fabric may alternatively be knitted if desired, either warp knitted or weft knitted. If the fabric is made solely from heat-recoverable fibres it will be recoverable in two dimensions, but if, as is preferred for the knitted fabrics, it is knitted from a heat stable fibre and a heat-recoverable fibre is either warp or weft inserted, it will be recoverable in only one direction.

The mean effective volume fraction of heat-recoverable fibres in the composite structure along any given direction will depend inter alia on the size of the fibre, the type of weave or knit used and the direction considered. The mean effective volume fraction R used in inequality (1) above is defined herein as the mean value along the direction considered of the summation of the product of the cross-sectional area of each heat-recoverable fibre multiplied by the vector component of the fibre in the given direction divided by the total cross-sectional area of the composite structure taken in the plane normal to the direction considered. Thus if the heat-recoverable fibres lie at an angle alpha to the considered direction, the product of the cross-sectional area of the fibre and its component in the considered direction is given by (fibre area multiplied by cos alpha). The sum of this value for all the fibres cut by the plane normal to the considered direction divided by the total area of the composite structure gives the value R at a specific point along the direction considered, and the mean value of R over the whole length of the relevant fabric portion in the direction considered is used in inequality (1) above and in Claim 1 below.

In the case of a weave where all the heat-recoverable fibres are parallel to each other (either the warp or weft in the case of a weave) and the direction considered is parallel to the recoverable fibres (i.e. the direction of recovery), then the mean value of R is given by the total cross-sectional area of all the recoverable fibres divided by the total cross-sectional area of the composite structure.

The heat-recoverable fabric is preferably bonded to, and preferably embedded in, the polymer matrix material. The previously mentioned advantage of irradiation is relevant here; if the fibres, before or after formation of the fabric are irradiated (particularly in the presence of oxygen), a chemical change to their surface occurs which significantly improves bonding of the matrix material. At or above the recovery temperature of the fibres the polymer matrix material should be capable of limited flow under pressure so that it retains the integrity of the composite structure without substantially impeding recovery of the fibres. It preferably has, at the aforesaid temperature, an elongation to break of greater than 50%, most preferably greater than 100% particularly 400-700%, and a 20% secant modulus of preferably at least $5 \times 10^{-2}$ MPa, most preferably at least $10^{-1}$ MPa, measured at a strain rate of 300% per minute.

The specified properties of the polymer matrix material need not necessarily apply after recovery although it may be desirable that the product be flexible at room temperature. Thus, for example, the polymer matrix material may eventually cure to a thermoset on heating, provided that the cure rate is sufficiently slow under the recovery conditions not to affect adversely the above mentioned physical properties of the polymer matrix material during the recovery of the fibres. Thus, for example, the polymer forming the matrix material may contain grafted hydrolysable silane groups which are capable of crosslinking the material subsequently in the presence of moisture. Alternatively the matrix material may include a polymer, preferably a rubber and especially an acrylic rubber, which contains epoxy groups and a room temperature insoluble curing agent e.g. dicyandiamide.

The polymer matrix material can be either a thermoplastic or an elastomer. In general, we prefer that the polymeric matrix material and the material of the recoverable fibres be chemically or physically compatible, and preferably both chemically and physically compatible. By this we mean that they be of similar or identical chemical types and that their relevant physical properties during lamination, installation and use be similar or idential in particular we prefer that the matrix and fibres be low density polyethylene and high density polypropylene respectively. The skilled man will be able to choose other pairs of compatible polymers. Example of thermoplastic materials suitabe as the matrix material include ethylene/vinyl acetate copolymers, ethylene/ethyl acrylate copolymers, polyethylenes including the linear low, low density and high density grades, polypropylene, polybutylene, polyesters, polyamides, polyetheramides, perfluoroethylene /ethylene copolymer and polyvinylidene fluoride. Considering the second class of materials this can include acrylonitrile butadiene styrene block co-polymer, acrylic elastomers including the acrylates and methacrylates and their copolymers, e.g. polybutyl acrylate, and poly 2-ethylhexyl acrylate, the high vinyl acetate copolymers with ethylene (VAE's), polynorbornene, polyurethanes and silicone elastomers and the like. The polymeric material forming the matrix may be transparent (at least to visible radiation) or completely opaque or it may have any opacity between these two extremes. If the opacity is increased for example by blending a small quantity eg up to about 5% by weight of carbon black into the matrix, the time taken for recovery appears to be reduced. Also, the resistance of the material to heat damage, especially by flame, and to UV damage is reduced. The matrix material ( or part of it) can be cross-linked, for example, a cross-linked ethylene/vinyl acetate copolymer, linear low density or high density grade polyethylene or an acrylic elastomer. The material can be cross-linked by irradiation or by other means such as chemical cross-linking using, for example, a peroxide cross-linking agent, provided that the physical properties of the matrix at the recovery temperature are as specified after the cross-linking step. Where irradiation is used a dose of 10 megarads or less, in particular from 3-7 megarads, is preferred. The resulting extent of cross-linking allows the matrix to recover with the fabric and also prevents the matrix running or dripping during heat recovery, especially during heat recovery by means of a torch. The recovery ratio of the composite after irradiation is preferably at least 50% especially at least 70% of that before irradiation. These dose values may regarded as typical for olefinic polymers such as polyethylene of low irradiation, and the skilled man will be able to select suitable dose values depending on the presence of various concentrations of prorads if any. The composite structure may be produced using a single irradiation step if the beam response of the matrix and fibre be made compatible; the beam response of the oriented fibres may be increased by the addition of prorads and that of the less oriented matrix be reduced by the addition of there of antirads. Otherwise separate cross-linking steps will be preferred. A further feature of post- lamination cross-linking (particularly by irradiation) is that a cross-link bond may be formed between the recoverable fibres and/or any other fibres which can help to maintain the structure as a true composite, particularly under severe recovery conditions. This may allow a much less severe laminating process, since it can obviate the need for physical interlocking.

The heat-recoverable fabric is preferably bonded to the polymer matrix material, and this bonding may be adhesive, that is to say by chemical or physical surface interaction, or alternatively mechanical interlocking may be provided.

Most preferably, the heat-recoverable fabric is embedded in the polymer matrix material thereby forming a composite structure. By "embedded" is meant that the polymer matrix material surrounds at least a major portion of the fibre surface area of the fibres making up the fabric.

The fibres are preferably totally surrounded by polymer matrix material; however it is possible and at times desirable, that substantially less than the total fibre surface area be surrounded by polymer matrix material. An instance where this is possible is where a fibre -matrix bond is formed. Sufficient fibre area should be bonded to the polymer matrix material or interlocked therewith to result in a composite structure which retains its integral structure during recovery of the article. For the avoidance of doubt it is here stated that the term matrix is used to include materials which surround (partially or totally) the fibres and also those materials which are merely affixed to a surface of the fabric but do not penetrate the interstices of the fabric.

Preferably the polymer matrix material at least on the surface of the composite structure facing the source of heat is substantially unstressed and has a thickness of at least 0.03mm especially at least 0.01 mm, more especially at least 0.2, particularly from 0.2 to 2mm as described in UK patent application No.8300217, as this improves the ability of the composite structure to be heat recovered using a conventional propane torch.

In the composite structure, the ratio of the volume occupied by the heat-recoverable fibres of the fabric to the total volume of the composite is at least about 0.01:1, preferably from about 0.1:1 to about 0.8:1 and most preferably from about 0.2:1 to about 0.4:1.

In the composite structure the heat-recoverable fibre volume in any given unit volume of composite is dependent on the fibre strength, polymer matrix strength and the integrity of the fibre/polymer matrix structure under recovery conditions. We have found that an acceptable recoverable product results if the inequality (1) is satisfied:

$$\frac{X}{Y} \frac{(1-R)}{R} < 1 \tag{1}$$

wherein X is the 20% secant modulus of the polymer matrix material and Y is the recovery stress of the fibres, both at a temperature T above the recovery temperature of the fibres, and R is the mean effective volume fraction of heat-recoverable fibres in the composite structure.

Preferably $\frac{X}{Y} \frac{(1-R)}{R} < 0.5$ most preferably $< 0.05$.

The composite structure can be formed for example by laminating one or more layers of polymer matrix material to the heat-recoverable fabric. Sufficient heat and pressure is preferably applied so that at least a major part of the fabric is bonded to the polymer matrix material, or so that a significant amount of mechanical interlocking occurs. The result is a composite structure which on application of heat recovers as a unit.

Other methods of bonding the fabric to the matrix can be used, for example, impregnation, solution coating, slurry coating, powder coating, reactive pre-polymers, e.g. acrylic prepolymers activated by UV or peroxide, and the like. In any bonding method employed sufficient heat to cause the fabric to recover to any significant extent should be avoided, unless the fabric is suitably restrained from recovery.

The heat-recoverable article can be used in numerous applications. It is particularly suitable for enclosing elongate substrates such as pipes, conduits, cables and the like. The heat-recoverable article can be coated on a surface thereof with a layer of a sealant or adhesive composition. The sealant can be a mastic and the adhesive can be a heat activatable adhesive such as a hot-melt adhesive. Hot-melt adhesives which can be used include polyamide and ethylene vinyl acetate copolymer based adhesives. Such adhesives are well known, for example see U.S. Patents Nos. 4,018,733, 4,181,775. If desired a heat-curable adhesive may be used for example as described in U.K. patent publication No. 2104800.

By appropriate selection of the polymer matrix material, the polymer matrix material can function as an adhesive to secure and seal the recovered composite structure to the substrate. The fabric can be embedded in more than one polymer matrix material to provide desired properties. For use in enclosing elongate substrates, the fabric can be laminated with a layer of matrix material on each of its surfaces, the surface which will be the inner surface when in use can be laminated to a polymer matrix material which has adhesive properties while the outer surface can be laminated to a material which is not. As will be readily apparent the matrix material can be selected for various other desirable properties inherent in the polymer material itself or provided with various additives such as antioxidants, ultra violet stabilizers, pigments, anti-tracking agents and the like.

The heat-recoverable article of this invention is typically a sheet but can be of any configuration such as tubular, including multiple tubular portions interconnected, for example, a break-out structure for cable splices where one cable is spliced to two or more other cables, or where two or more pipes are joined together.

A heat-recoverable sheet in accordance with this invention can be used to form a cable splice case, a pipe segment, or pressure vessel as described in UK patent application No 8300221. Heat recoverable articles according to the present invention have been found to be particularly suitable for use in enclosing a splice between pressurized telecommunication cables. The recovered article is exceptionally resistant to the effects of pressure and preferred embodiments are impervious and have sufficient hoop strength to resist rupturing under about 70 KPa pressure (the pressure typically used in pressurized telecommunication systems) at the operating temperatures of such systems.

Where a cable splice case is to be formed, the sheet of the invention will be used in conjunction with some kind of internal support, such as a generally cylindrical liner having tapered ends. The liner is preferably shaped in this way such that its larger central section fits around the bulky cable splice, and its tapered ends accomodate the transition in size down to the cables. The liner may be of the wrap-around type, in which case it preferably comprises half-shells having crowned or other end supports, or it comprises a sheet of stiff material which may be rolled around the cable splice and again crowned ends may provide the end supports which can be taped down onto the cables. In this way, a pressure vessel may be built around an object (such as a cable splice); the sheet material providing an impermeable, creep resistant and split resistant surround, and the liner providing impact resistance, axial strength and other mechanical requirements.

If the splice case or pressure vessel is intended to retain pressure during use, rather than merely be pressure tested for integrity before use, certain other features may be provided. A valve on other pressure access point will be usefully provided in the recoverable sheet, and may also be affixed to the internal liner. A sheet based on fabric is well suited to the provision of a valve or other device which must pass though the sheet, since splitting is less likely to occur. Even if some fibres are broken when the valve is inserted, the damage should not spread, and if care is taken a hole for the valve may be produced simply by moving adjacent fibres apart.

A second feature desirable in a pressurized splice case is some means for preventing any bond between outer sleeve and cable being put into peel by the internal pressure. We have obtained satisfactory results using a strip of material having one surface which abuts (and preferably bonds to) the cable and another surface which abuts (and preferably bond to) the sleeve, such that the two surfaces can open out. The strip of material preferably has a U-or V-shaped cross-section and is installed with the re-entrant side facing into the splice case.

Other uses for the composite structure include environmental protection or repair or insulation of a wide range of substrates in the telecommunications, high voltage, electronic, oil and gas, and process industries. For example in addition to the production of cable splice cases, cables jackets may be repaired by the installation of the new composite, with particular benefit due to its high strength, flexibility and abrasion resistance. Also, pipes may be protected from corrosion or other damage, in which case a sealant, particularly a mastic, coating on the composite is desirable. Pipe insulation can also be built up by means of the composite, optionally with some other insulation material such as a foaming material. Thermal and/or electrical insulation may be provided.

A further use for the composite is in the production of hollow articles for housing and protection of a wide variety of components.

Yet another use of the composite is for securing together two or more articles, for example a pipe or a cable onto an elongate substrate. Where pipes or cables have to be held secure under adverse conditions some tight and environmentally resistant fixing is needed. One particularly important example of such a use is for the protection of electrical wiring extending along the external surface of a helicoptor rotor blade spar. In certain instances it may be necessary for electrical wiring to extend along the external surface of the rotor blade spar before it passes into the blade. Such wiring may, for example, be used to transmit electrical power for heating elements located along the leading edge of the blade in order to prevent the blade icing. In this instance the wiring is retained along the spar surface by recovering thereon a heat recoverable article according to the invention. It has been found that the fabric recoverable articles are particularly suited to this application in view of their relatively high abrasion resistance which prevents or reduces any damage thereto that may be caused by exposure to the elements. In addition, the relatively high forces exerted on the substrate by the installed heat recoverable article prevent or reduce any movement of the electrical wiring caused by the centrifugal force or other forces when the blade is in operation. Furthermore, the fact that the fabric articles have relatively high split resistances enable them to be recovered over protuberances on the spar such as nuts and bolts.

Helicopter rotor blades are supported by spars one end of which is attached to the rotor blade gearbox. A number of heating pads may be arranged along the length of the leading edge of the rotor blade to prevent icing of the blade, and the electrical power is transmitted to the heating pads along a wire harness. in order to retain the harness securely on the spar, a heat-shrinkable wraparound composite structure is recovered onto that portion of the spar along which the harness extends. The composite structure is preferably formed from a laminated heat-shrinkable fabric in which the laminated polymeric layers are unirradiated and the recovery ratio of the composite structure is approximately 2:1. It is, of course, possible for the laminated layers to be irradiated or for the recovery ratio to be varied. The cover is preferably formed as a wraparound article and is provided with a rail and channel type closure arrangement. The under surface of the cover may be provided with a layer of a hot-melt adhesive e.g. an ethylene/vinyl acetate copolymer based or polyamide based adhesive in order to secure the cover to the spar and to prevent ingress of water along the harness. Depending on the use of the cover, it may be desirable to coat the entire surface thereof with the adhesive or only to coat marginal portions extending along the edges thereof.

For many uses, the recoverable composite structure of the invention is preferably produced open as opposed to tubular. The sheet is easier to manufacture that way, and also easier to install since a free end of the substrate to be covered need not be accessible. The problem that results, however, is how to secure the sheet in the wrapped configuration around the substrate; what is required is some means whereby the recoverable fibres at opposing edges of the sleeve be trapped together. The solutions can be regarded as of four broad types. Firstly a lap or other bond may be made between opposing edges of the sheet,optionally with a patch to prevent peel-back of the overlapping edge on recovery. Here the bond will generally be between the matrices of the opposing edge portions, and one must therefore ensure that the fibre recovery force is properly transmitted from the fabric to the matrix at those edges. Secondly some means which penetrates the sheet may be used, and here the fabric will be directly involved. In general, this technique was not possible with continuous sheet materials due to the problem of splitting. With a fabric based material, however, split resistance may be extremely high. Examples of this type of closure include stitching, stapling, riveting, the use of pre-inserted catches such as press-studs or the use of means which may be positioned adjacent a lap joint in the sheet and which has a plurality of projections which penetrate both thicknesses of sheet. This second type is mentioned in more general terms below. The third broad type of closure involves forming or building up opposing edge portions of the sheet in order that they may be held together by some form of clamping means such as a channel of C-shaped cross-section or by a re-usable tool. This may be achieved by bonding material to the edge portions or by folding the edge portions back on themselves (optionally around a rod running lengthwise of the sheet). The resulting edge portions of the sleeve may then have a shape similar to the rails of the classic rail-and-channel closure disclosed in UK patent 1155470.

The fourth technique to be mentioned comprises forming the fabric in such a way that the recoverable fibres do not terminate at the opposing edges to be jointed, but instead double back. An example is to use recoverable weft on a shuttle loom and insert a closure member into the weave at each edge, or to employ special selvedges. A further possibility is to weave closed pockets at each edge, or to weave tubular structure and flatten the tube, the flattened tube then being used as a sheet which can accommodate closure rods or other members within it. These ideas, although mentioned in terms of weaves, apply <u>mutatis mutandis</u> to other fabrics such as braids and knits.

Several of the above closure techniques are described in UK patent application 8300223.

Where the recoverable sheet of the invention is used in the wrap-around form, it may be desirable to employ a flap under the opposing edges which are brought together. Such a flap, which may be integral with the sheet, will improve environmental sealing and if need be, pressure retention.

The second technique for maintaining the sheet in a wrap-around configuration may now be returned to in more general terms. The ability of the recoverable composite to be penetrated allows portions of it to be joined together to form not ony a tubular structure, but also form various shaped hollow articles such as bends and tees and also to form diverging branch-offs in simple cylindrical articles. In general terms therefore two or more portions of the composite structure may be joined together by means of a mechanical joining arrangement that penetrates the fabric. The joining arrangement is preferably one or more lines of stitches or one or more staples. The portions joined together may be discrete or may merely be separate portions of a single piece of composite material. Where stitching is used each line of stitches preferably has from 200-800 stitches per metre, and the line of stitches closest to an edge of the fabric is preferably separated from that edge by at least four rows of fibres, and in the case of high float fabrics such as sateens where the high float is perpendicular to the join line a spacing of at least 6 rows may be preferred. This will correspond to an edge overlap of at least 8-10 mm, preferably at least 16 or 20 mm for the fabric types preferred. A hem may, of course, be provided but this will increase the thickness of the fabric which in general is not desirable. In order to reduce the possibility of breakage of the heat-recoverable fibres by the stitching or sewing (or stapling) operation, the needles ( or staples) should be very sharp at their tips and have a maximum used diameter of the same order. of magnitude as the distance between the heat-shrinkable fibres of the fabric.

An advantage of stitching or stapling arises as follows. When the fibres recover by shrinking axially, their diameter or titre increases. As a result the perforations in the fabric through which the stitches or staples pass close up and the fabric grips the stitches or staples, thereby increasing the strength of the join. The reduction in size of the perforations also helps any adhesive layer or matrix material to fill the perforations completely and so reduce the possibility of leakage of fluids though the recovered article, this being particularly useful in articles used for environmental sealing, for example cable splice cases or corrosion protection for pipes or pipe insulation.

Usually, it will be necessary only for the composite structure to contain a single fabric embedded in or bonded to the matrix polymer. However it is quite possible, and in some instances it may be desirable, for the composite structure to comprise a plurality of fabrics, e.g. two fabrics having a layer of the matrix polymer therebetween, and optionally on one or more of the outwardly facing surfaces Articles that employ more than one fabric are especially useful for enclosing substrates that have high internal pressures or for use in cases in which the article may be subject to particularly severe mechanical abuse.

The invention is further illustrated by the accompanying drawings in which:

Figure 1 is a perspective view of a wrap-around article according to the invention with the thickness of the composite structure exaggerated for the sake of clarity;

Figure 2 is a section through part of the article of figure 1;

Figure 3 is an exploded sectional view showing the edge regions of the article shown in figure 1 after it has been wrapped around a substrate; and

Figures 4 and 5 are exploded sectional views showing edge regions of modifications of the article shown in figures 1 to 3 after they have been wrapped around a substrate.

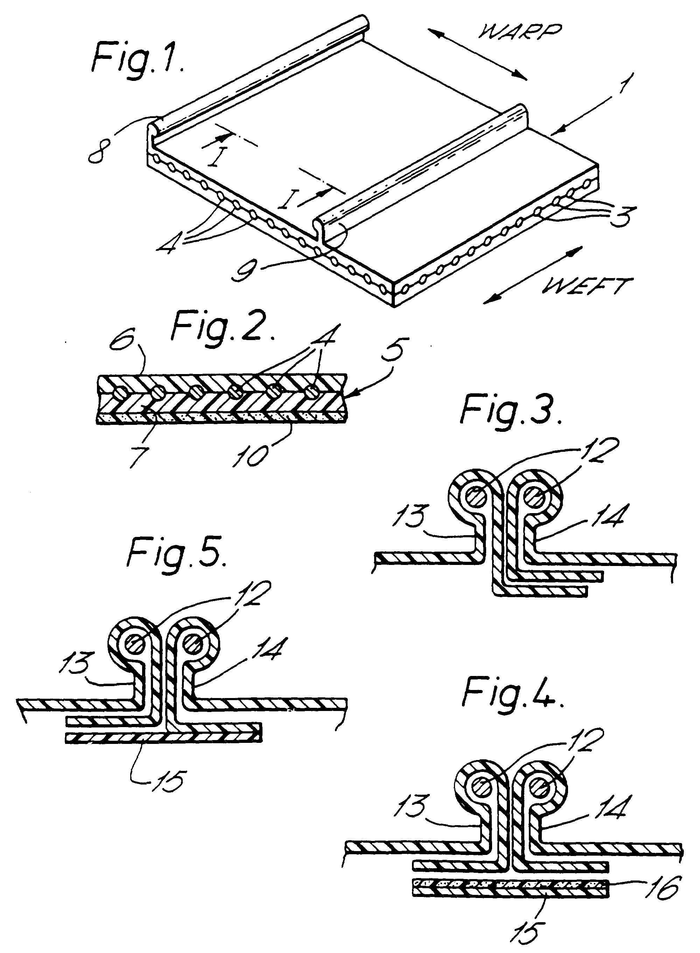

Figure 1 shows in perspective an article according to the invention which is in the form of a wraparound device suitable for enclosing an elongate substrate such as a splice in a telecommunication cable. The article is formed from a composite sheet 1 comprising a fabric having heat-shrinkable filaments 3 in the warp direction and multifilament glass yarn 4 in the weft direction.

The fabric is entirely embedded in a matrix polymer material 5 as shown more clearly in figure 2. The matrix material 5 comprises two laminae 6 and 7 formed from a thermoplastic polymer, the laminae having been laminated onto opposite sides of the fabric e.g. by a melt lamination process and subsequently cross linked so that each lamina 6 and 7 adheres both to the fabric and to the other lamina, and so that they exhibit the desired flow characteristics under the chosen recovery conditions. After the composite sheet has been formed, a rail is formed along each of the edges that extend along the weft direction in order to provide means for retaining those edges together after the article has been wrapped around a substrate. Before or after the rails have been formed in the article, the composite sheet 1 is provided with a layer 10 of a sealant or adhesive, e.g. a mastic or a hot melt adhesive. The article has been found to have significant advantages over prior art articles. Its ability to withstand hoop stress, resulting for example from internal pressure is higher; it can be heat-shrunk using a torch with reduced liklihood of damage, it is abrasion resistant; and it is highly split resistant.

Figure 3 is an enlarged exploded sectional view showing the closure rails of the article in their disposition after the article has been wrapped around a substrate Each rail is formed by wrapping a marginal portion of the composite sheet around a rod 12 formed from a high melting point material e.g. nylon, pressing faces 13, 14 or the marginal portion together to form a wall between the rod 12 and the rest of the sheet, and heating the marginal portions to set them in the configuration shown and to allow partial recovery of the fibres in the wall. As shown in one of the edge portions the composite sheet is bent back on itself while in the other edge portion the sheet extends beyond the rail to form an underlying sealing flap. After the device has been wrapped around the substrate the two edge portions are brought together until they abut and a metal channel, for example as shown in U.K. patent Specification No. 1,155,470, is slid over the rails to retain the edge portions together and the article is then recovered.

Figure 4 shows a modification of the article shown in figures 1 to 3 in which the composite sheet is bent back along each edge portion and a separate polymeric sealing member 15 having a sealant layer 16 is provided. The sealant member may be formed from rubber or other elastomer, polyethylene or the like.

Figure 5 shows a further modification of the article in which the sealing member 15 is bonded to one of the edge portions during manufacture.

Example 1

Heat-recoverable fabrics suitable for use in the heat-recoverable article of this invention were prepared by weaving high density polyethylene monofilaments into fabrics of various weave patterns and subjecting the fabric to irradiation. The fabrics were irradiated using 6 MeV electrons in air at a dose rate of 0.24 Mrads/minute. Properties of the fibres and fabrics are listed in Tables I and II.

TABLE I

| Fiber Properties | | | | |
|---|---|---|---|---|
| Fibre | Property | Radiation Dosage (Mrads) | | |
| | | 8 | 16 | 32 |
| 1 | 100% Modulus (MPa) at 150°C | 0.13 | 0.3 | 0.42 |
| | Tensile Strength (MPa) at 150°C | 0.93 | 1.4 | 1.46 |
| | Elongation to Break (%) at 150°C | 1480 | 924 | 754 |
| | Gel Content (%)* | 27.0 | 58.0 | 67.0 |
| | Recovery Force (MPa) (peak value) | 1.17 | 1.2 | 1.3 |
| | Recovery (%) | 89 | 88.5 | 88.5 |
| | | | | |
| 2 | 100% Modulus (MPa) at 150°C | 0.27 | 0.21 | 0.34 |
| | Tensile Strength (MPa) at 150°C | 1.36 | 1.93 | 2.98 |
| | Elongation to Break (%) at 150°C | 752 | 487 | 777 |
| | Gel Content (%)* | 10.0 | 40.0 | 61.0 |
| | Recovery Force (MPa) (Peak value) | 0.57 | 0.6 | 0.65 |
| | Recovery (%) | 89 | 87 | 85 |

* Obtained by refluxing in xylene

## TABLE II

### Fabric Properties

| Fabric | Fibre | Weave Type | Weave Density | Weft Fibre | % Recovery Radiation Dosage (Mrads) | | | |
|---|---|---|---|---|---|---|---|---|
| | | | | | 4 | 8 | 16 | 32 |
| 1 | 1 | Twill 2x2 | 40/7 | Glass | 85 | 86 | 85 | 83 |
| 2 | 1 | Twill 2x2 | 40/11 | Glass | 78 | 80 | 86 | 80 |
| 3 | 1 | Twill 2x2 | 40/20 | Glass | 60 | 70 | 77 | 80 |
| 4 | 1 | Twill 2x2 | 80/13 | Glass | 66 | 75 | 74 | 74 |
| 5 | 1 | Twill 2x2 | 60/10 | Glass | 75 | 76 | 78 | 78 |
| 6 | 1 | Twill 4x4 | 80/26 | Glass | — | 55 | 56 | 59 |
| 7 | 1 | Plain (double pick-weft | 80/7 | Glass | — | 60 | 62 | 60 |
| 8 | 1 | Twill 2x2 | 42/20 | Glass | | | | |
| 9 | 1 | Hopsack | 40/14 | Glass | — | 60 | 55 | — |
| 10 | 1 | Twill 2x2 | 42/26 | Cotton | | | | |
| 11 | 2 | Twill 2x2 | 90/12 | Glass | 76 | 76 | 76.8 | 76.8 |
| 12 | 2 | Twill 2x2 | 80/12 | Glass | 77 | 77 | 77.5 | 77 |
| 13 | 2 | Twill 2x2 | 60/12 | Glass | 80.5 | 80 | 79.8 | 79.8 |
| 14 | 2 | Sateen | 70/26 | Glass | 76 | 77.5 | 77.8 | 77.2 |
| 15 | 2 | Plain (double pick-weft) | 90/6 | Polyester A | | 75** | | |
| 16 | 2 | Twill 2x2 | 90/12 | Polyester A | | 72.5** | | |
| 17 | 2 | Plain | 90/6 | Polyester B | | 75** | | |
| 18 | 2 | Twill 2x2 | 90/12 | Polyester B | | 72** | | |

\* Shown as warp density fibers per inch/weft density fibres per inch
\*\* Values recorded at 10 Mrads
Polyester A = 1000 denier polyester, m. pt. 220°C
Polyester B = 840 denier polyester, m.tpt. 220°C

EP 0 712 715 A2

Example 2

Heat-recoverable composite sheets were prepared by laminating a 60/10 (23.6/3.9 in cms) twill fabric woven from polyethylene monofilament identified as fiber 1 in the above example, with polymer matrix material in the form of extruded sheet 0.5 mm thickness having little, if any, irradiation. The lamination was conducted in a press between silicone rubber sheets under conditions appropriate for the particular polymer matrix material used. The laminating conditions are shown in table III.

TABLE III

| | | Laminating Conditions | | |
|---|---|---|---|---|
| Composite No. | Polymer | Temperature (°C) | Pressure (kg/cm2) | Time (mins.) |
| 1 | EVA 460 | 105 | 45 | 5 |
| 2 | EVA 250 | 100 | 45 | 3 |
| 3 | Low density polyethylene | 150 | 22.5 | 5 |

The resulting composite structures were subjected to irradiation with 6 MeV electrons in air at room temperature at a dose rate of 0.24 Mrads/minute for times sufficient to produce a radiation dose of 2,4 or 6 Mrads in respective samples. The properties of the polymer matrix materials are shown in Table IV and % recovery of composite structures are shown in Table V. In Table V, the composite structures were prepared from Fabric No. 11 preparation in Example 1, laminated with the polymer matrix identified in Table IV and the composite irradiated with an absorbed dose of 4 Mrads. The recovery ratio of the composite structure is preferably at least 40%, more preferably at least 65% especially at least 70% of that of the free fabric.

## TABLE IV

Physical Properties of Matrix Polymer Following Irradiation

| Composite No. | Temperature | Property | | Dose (Mrads) | | | |
|---|---|---|---|---|---|---|---|
| | | | | 0 | 2 | 4 | 6 |
| 1 | 60°C | Tensile Strencth | (MPa) | 4.15 | 6.21 | 6.06 | 6.12 |
| | 60°C | 100% Modulus * | (MPa) | 2.51 | 2.37 | 2.59 | 2.69 |
| | 60°C | Initial Modulus ** | (MPa) | 11.7 | 10.58 | 10.46 | 10.72 |
| | 60°C | Elongation | (%) | 360 | 602 | 422 | 400 |
| | 60°C | Gel Content | (%) | --- | --- | --- | --- |
| 2 | 60°C | Tensile Strength | (MPa) | 0.65 | 1.98 | 2.44 | 3.16 |
| | 60°C | 100% Modulus | (MPa) | 0.59 | 0.75 | 0.8 | 0.93 |
| | 60°C | Initial Moedulua | (MPa) | 1.82 | 2.51 | 2.72 | 2.36 |
| | 60°C | Elongation | (%) | 205 | 630 | 596 | 454 |
| | 60°C | Gel Content | (%) | --- | --- | --- | --- |
| 3 | 60°C | Tensile Strength | (MPa) | 6.82 | 7.61 | 8.11 | 8.20 |
| | 60°C | 100% Modulus | (MPa) | 5.33 | 5.05 | 4.8 | 5.19 |
| | 60°C | Initial Modulus | (MPa) | 25.07 | 24.6 | 22.6 | 22.71 |
| | 60°C | Elongation | (%) | 319 | 422 | 467 | 408 |
| | 60°C | Gel Sontent | (%) | --- | --- | --- | --- |

EP 0 712 715 A2

TABLE IV (cont.)

Physical Properties of Matrix Polymer Following Irradiation

| Composite No. | Temperature | Property | | Dose (Mrads) 0 | 2 | 4 | 6 |
|---|---|---|---|---|---|---|---|
| 1 | 150°C | Tensile Strength | (MPa) | 0 | 0.25 | 0.6 | 0.54 |
| | 150°C | 100% Modulus | (MPa) | 0 | 0.06 | 0.49 | 0.27 |
| | 150°C | Initial Modulus | (MPa) | 0 | 0.67 | 0.96 | 0.26 |
| | 150°C | Elongation | (%) | 0 | 657 | 122 | 463 |
| | 150°C | Gel Content | (%) | 0.01 | 56.6 | 66.2 | 79.95 |
| 2 | 150°C | Tensile Strength | (MPa) | 0 | 0.05 | 0.25 | 0.47 |
| | 150°C | 100% Modulus | (MPa) | 0 | 0.02 | 0.06 | 0.16 |
| | 150°C | Initial Modulus | (MPa) | 0 | 0.07 | 0.09 | 0.23 |
| | 150°C | Elongation | (%) | 0 | 575 | 572 | 313 |
| | 150°C | Gel Content | (%) | 0.19 | 64.5 | 66.1 | 70.7 |
| 3 | 150°C | Tensile Strength | (MPa) | 0 | 0.07 | 0.13 | 0.30 |
| | 150°C | 100% Modulus | (MPa) | 0 | 0.02 | 0.03 | 0.07 |
| | 150°C | Initial Modulus | (MPa) | 0 | 0.03 | 0.05 | 0.11 |
| | 150°C | Elongation | (%) | 0 | 1016 | 669 | 593 |
| | 150°C | Gel Content | (%) | 2.38 | 33.78 | 39.22 | 64.56 |

TABLE V

| Composite No. | Polymer Matrix | % Recovery |
|---|---|---|
| 1 | EVA 460 | 70 |

Continuation of the Table on the next page

TABLE V   (continued)

| Composite No. | Polymer Matrix | % Recovery |
|---|---|---|
| 2 | EVA 250 | 69 |
| 3 | Linear low density polyethylene | 68 |
| 4 | DYNH-3 | 60 |

## EXAMPLE 3

A fabric was formed using an eight shaft satin employing 0.29mm diameter high density polyethylene filaments in the warp and 75 E.C.G. glass fibre yarn in the weft. The fabric density (warp density/weft density, measured in fibres/inch, fibres/cm was 90/16, 35.4/6.3 The fabric was irradiated with 1.5 MeV electrons to a dose of 15 Mrads to give the warp fibres a gel content of 37.3% (refluxing in xylene) and a 100% secant modulus of 0.60 at 150°C.

The fabric was then extrusion laminated with low density polyethylene at a melt temeperature of 260°C between a cooled metal roller and a rubber faced roller. The polyethylene had a thickness of 0.6mm on one side of the fabric and a thickness of 0.3mm on the other side and, after lamination, the composite was irradiated with high energy electrons to a further dose of 4 Mrads. The low density polyethylene used had a melt flow index of 3.0, a number average molecular weight Mu of 14,800 and a weight average molecular weight Mw of 114,800. After the second electron irradiation step the low density polyethylene laminae which constituted the matrix material, had the following properties:

| | |
|---|---|
| 100% secant modulus at 60°C | 4.8 MPa |
| 100% secant modulus at 150°C | 0.03 MPa |
| Tensile strength at 150°C | 0.13 MPa |
| Elongation to break at 150°C | 670% |
| Gel content (reflux in xylene) | 39.2% |
| Complex viscosity at 150°C and at 1.0 rad $5^{-1}$ | $2.79 \times 10^5$ poise |

The high density polyethylene fibres, which had been irradiated to a dose of 20 Mrads, had the following properties:

| | |
|---|---|
| 100% secant modulus at 150°C | 0.29 MPa |
| tensile strength at 150°C | 2.18 MPa |
| elongation to break at 150°C | 780% |
| gel content (reflux in xylene) | 42.25% |
| recovery force | 0.67 Mpa |
| recovery | 87% |

A sample of the sheet so formed was cut with dimensions of 15 inches (6 cm) in the warp direction and 30 inches (12 cm) in the weft direction, and was provided with a closure arrangement as shown in figure 5 by wrapping opposite edges parallel to the weft direction around 3.5mm diameter nylon rods, pressing the closure region into the desired shape and heating to allow partial recovery of the fabric. Before the closure arrangement was formed, a 0.4mm thick layer of polyamide adhesive as described in U.S. patent Nos 4018733 or 4181775 was applied to the surface of the 0.6mm polyethylene lamina by a hot melt coating technique.

The wraparound article so produced had a 4.1 recovery ratio (i.e. 75%) in the wrap direction.

The article was tested by forming a branch-off in which a 43mm polyethylene jacketed telecommunication cable was divided into two 19mm diameter polyethylene jacketed cables. A Raychem "XAGA" (registered trade mark) aluminium liner having collapsible end crowns was positioned over the branch off so that the central, cylindrical portion had a diameter of 92mm. The article was then wrapped around the cables and liner and recovered thereon by being heated with a propane torch. The article had been sealed against leakage of pressurising gas between the article and the cable jacket in known manner and a clip as described in U.S. patent No. 4298415 to Nolf was used to seal the crotch region of the branch-off. The cables were pressurised to an internal gauge pressure of 15 p.s.i. (1.05 kg cm$^{-2}$) and the branch off was subjected to a temperature cycle test in which in each cycle, the temperature was raised from ambient (23°C) to +60°C over a period of one hour, maintained at +60°C for four hours, lowered from 60 to -30°C over two hours, maintained at -30°C for four hours and then raised to ambient (23°C) over one hour. No leakage was recorded after ten cycles.

EXAMPLE 4

Example 3 was repeated with the exception that the fabric had a weft density of 18 fibres per inch (7.1 fibres per cm) giving a recovery ratio of the composite fabric of 3.7:1 (i.e. 73%).

EXAMPLE 5

Example 3 was repeated with the exception that the weft yarn was changed from E.C.G. 75 glass fibre to E.C.G. 150 glas fibre yarn, and the fabric density was 90/18 (30.5/6.3 in cms) giving a 4:1 recovery ratio in the warp direction.

EXAMPLE 6

Example 3 was repeated with the exception that the glass fibre was replaced by a multifilament yarn formed from aromatic polyamide filaments sold by Du Pont under the tradename "Kevlar". This product had substantially the same properties as that of Example 3 but had a substantially higher trouser tear value (measured according to the British standard) of 150N.

COMPARATIVE EXAMPLE 1

A heat-shrinkable woven fabric using a standard b-staged epoxy resin matrix polymer was produced as a comparison. An epoxy resin was formed having the formulation:

| COMPONENT | Parts by weight |
|---|---|
| Epoxy resin (Epoxy No. 475) sold by Shell Chemicals under tradename EPON 1001 | 70 |
| Epoxy grafted acrylic rubber modifier (note 1) | 30 |
| Anchor 1699 (tradename)-Azelaic dihydrazide | 9.8 |
| Imidazole (accelerator) | 1 |

Note (1): produced by compounding an acrylic elastomer (acid value 3000) sold by Du Pont under the tradename "Vamac" with a bisphenol A epoxy resin sold under the tradename "Epikote 1001" to give eleven epoxy groups per acid group.

The components were dissolved in methyl ethylketone to yield a solution of 20% solids content. The solution was applied several times to a 60/12 (23.6/4.7 in cms) twill 2up 2 down fabirc having 0.35 mm diameter unirradiated high density polyethylene warp fibres and E.C.G. 150 glass yarn in the weft, so that the thickness of the resulting composite fabric was approximately 0.75 mm. The composite fabric was then heated for one hour at 60°C to b-stage the epoxy resin.

When the article so formed is heated by means of a torch to recover it, the viscosity of the matrix polymer drops almost immediately to a value of about 50 poise and then, within a very short time the viscosity of the surface layer of the matrix increased to greater than $10^8$ poise forming a skin on the matrix material which blistered and prevented recovery of the fibres to some extent. In addition, a significant number of the polyethylene fibres snapped on recovery.

COMPARATIVE EXAMPLE 2

A fabric as described in comparative Example 1 was irradiated with high energy electrons to a dose of 10 Mrads. When heated by means of a torch the matrix material blistered and cracked and a large number of bubbles were produced in the matrix material. The maximum recovery ratio recorded was about 2:1 in view of the effect of the cured or partially cured matrix material holding out the fibres against their recovery forces.

**Claims**

1. A flexible recoverable composite structure comprising a recoverable fabric and a polymeric matrix material laminated thereto, in which:

   (a) the recoverable fabric comprises a cross-linked recoverable polyolefin having a recovery stress of 1.5 to 5 MPa; and
   (b) the matrix is cross-linked such that the recovery ratio available in the composite is at least 65% of that available in the free fabric, and the polymeric matrix material, per se, after irradiation has room temperature elongation of 400-700% measured at a strain rate of 300% per minute.

2. A composite structure according to claim 1, wherein the fabric is a woven fabric comprising recoverable polyolefin in one direction and a heat-stable fibre in the other direction.

Fig.1.
WARP
WEFT

Fig.2.

Fig.3.

Fig.5.

Fig.4.